# EUROPEAN PATENT APPLICATION

(11) **EP 1 107 618 A2**
(43) Date of publication of application: **13.06.2001**
(21) Application number: 00126200.5
(22) Date of filing: 30.11.2000
(51) Int. Cl.: H04Q 7/22, H04M 3/533

(54) **Method of transmitting and receiving multimedia data using short message service in portable radio telephone**

(30) Priority: 30.11.1999 KR 9953959
(71) Applicant: SAMSUNG ELECTRONICS CO., LTD., Suwon-City, Kyungki-do (KR)
(72) Inventor: Na, Chung-Seob, Suwon-shi, Kyonggi-do (KR)
(74) Representative: Grünecker, Kinkeldey, Stockmair & Schwanhäusser Anwaltssozietät

(57) **Abstract**

Disclosed is a portable radio terminal system. In transmission, a multimedia short message is edited, and a plurality of sub multimedia short messages each of which has a reference transmission capacity are created and sequentially transmitted to an opposite telephone number if it is determined that the edited multimedia short message exceeds the reference transmission capacity, as a result of checking the data amount of the edited multimedia short message. In reception, it is checked whether or not a received multimedia short message is a sub multimedia short message, and if so, it is checked whether or not the received sub multimedia short message is the final one. If the received sub multimedia short message is determined to be the final one, as a result of checking, a multimedia short message is constructed by combining all the received multimedia short messages.

## Description

The present invention relates generally to a portable radio terminal system. In particular, the present invention relates to a method of transmitting and receiving multimedia data using a short message service.

Generally, a short message service (SMS) is provided through a portable radio terminal in addition to a telephone call service. Such a short message service is provided in a manner that if a ccrtable radio terminal user inputs and transmits the telephone number of the opposite portable radio terminal after the user prepares a desired text, the prepared text is constructed as a short message, and then the short message is radio-transmitted to a base station (BS) and a mobile switching center (MSC) connected to the base station through a paging channel.

The mobile switching center, which received the short message, radio-transmits the short message to the opposite radio terminal. The opposite radio terminal displays the short message if the user requests the display of the transmitted short message. As described above, since the short message is transmitted through the paging channel, it is possible that the user transmits the desired message in the form of a text having a predetermined amount of data even if the opposite radio terminal line is busy, thereby improving user convenience.

However, according to the conventional short message service, if the user intends to transmit to the opposite radio terminal a short message that exceeds the predetermined amount of data, the user must divide the short message into several sub-messages each of which has an amount of data less than the predetermined amount of data, and separately prepare and transmit the respective sub-messages, causing the user inconvenience in use.

Also, since the amount of data which can be transmitted as the short message is limited to the predetermined amount as described above, it is impossible to transmit data which exceeds the predetermined amount of data, for instance, multimedia data such as picture data, melody data, and large-capacity text data.

Accordingly, the present invention has been made in an effort to solve the problems occurring in the related art, and therefore it is the object of the present invention to provide a method of transmitting multimedia data through a multimedia short message in a portable radio terminal.

According to an aspect of the present invention, a method of receiving multimedia data through a multimedia short message in a portable radio terminal is provided.

According to another aspect of the present invention, there is provided a method of transmitting a multimedia short message using a short message service in a portable radio terminal, comprising the steps of editing the multimedia short message, receiving the entry of a transmission key after completion of the multimedia short message editing, receiving the entry of a telephone number of an opposite portable radio terminal to which the multimedia short message is to be transmitted after the entry of the transmission key, if a data amount of the edited multimedia short message is determined to exceed a reference transmission capacity, as a result of checking after the entry of the telephone number, creating a plurality of sub multimedia short messages by dividing the data amount of the multimedia short message by the reference transmission capacity, and sequentially transmitting the plurality of sub multimedia short messages to the telephone number.

According to still another aspect of the present invention, there is provided a method of receiving a multimedia short message using a short message service in a portable radio terminal, comprising the steps of checking whether or not a received short message is the multimedia short message when the short message is received, if the short message is determined to be the multimedia short message, as a result of checking, checking whether or not the multimedia short message is composed of sub multimedia short messages, if the multimedia short message is determined to be composed of the sub multimedia short messages, as a result of checking, checking whether or not the presently received sub multimedia short message is the last one, and if the presently received sub multimedia short message is determined to be the last one, as a result of checking, constructing the multimedia short message by combining all the received sub multimedia short messages.

The above object and advantages of the present invention will become more apparent by describing in detail preferred embodiments thereof with reference to the attached drawings in which:
FIG. 1 is a block diagram illustrating the internal construction of a portable radio terminal for performing the method according to an embodiment of the present invention;
FIG. 2 is a flowchart illustrating the multimedia short message editing process according to an embodiment of the present invention;
FIG. 3 is a view illustrating the short message format according to an embodiment of the present invention;
FIG. 4 is a view illustrating a table showing the data type of the short message format of FIG. 3;
FIG. 5 is a flowchart illustrating the multimedia short message transmitting process according to an embodiment of the present invention;
FIGs. 6 and 7 are flowcharts illustrating the multimedia short message transmitting process according to another embodiment of the present invention;
FIG. 8 is a flowchart illustrating the multimedia short message receiving process according to an embodiment of the present invention; and
FIG. 9 is a flowchart illustrating the multimedia short message receiving process according to another embodiment of the present invention.

Reference will now be made in greater detail to the preferred embodiments of the present invention. In explaining the present invention, only the portions required for understanding the operation of the present invention will be explained, and explanation of other portions will be omitted when they may make the subject matter of the present invention rather unclear.

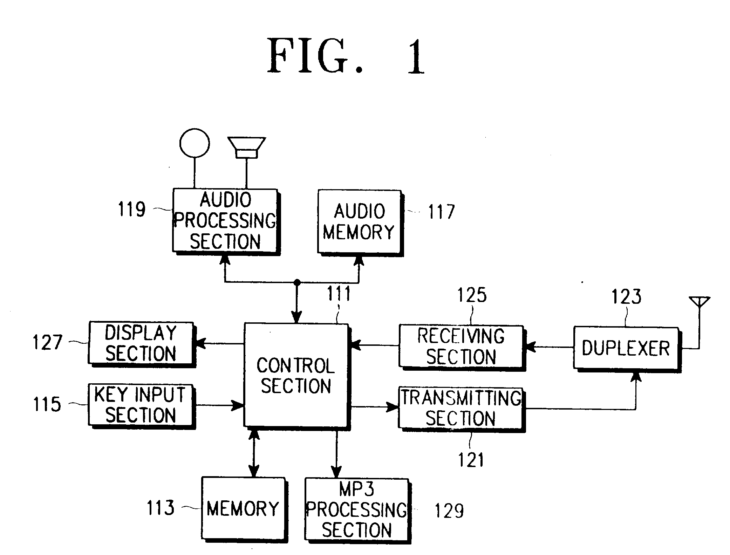

FIG. 1 is a block diagram illustrating the internal construction of a portable radio terminal for performing the method according to an embodiment of the present invention.

Referring to FIG. 1, a control section 111 controls the whole operation of the portable radio terminal. A memory 113 stores therein a control program of the portable radio terminal and control data generated according to the control of the control section 111.

A key input section 115, which is provided with a plurality of dialing digit keys, a menu key, a send key, and an end key, generates and transfers to the control section 111 key signals corresponding to the keys selected by a user.

An audio memory 117 stores therein a plurality of audio messages. An audio processing section 119, under the control of the control section 111, analog-processes the audio message readout from the audio memory 117 to output the audio message through a speaker, and digital-processes an analog audio signal inputted through a microphone by the user.

A transmitting section 121 receives the signal generated from the control section 111, modulates the signal, and transfers the modulated signal to a duplexer 123. The duplexer 123 transmits the radio signal transferred from the transmitting section 121 through an antenna, and transfers a signal received through the antenna to a receiving section 125. The receiving section 125 demodulates the radio signal transferred from the duplexer 123, and transfers the demodulated signal to the control section 111. The control section 111 controls the call in accordance with the transferred signal.

A display section 127 is implemented by a liquid crystal display (LCD) unit, light emitting diodes (LEDs), etc., and displays the control data and input data of the portable telephone terminal equipment under the control of the control section 111. Also, an MP3 processing section 129 processes transmitted/received data by Moving Picture Coding Experts Group Layer 3 (MPEG 3) under the control of the control section.

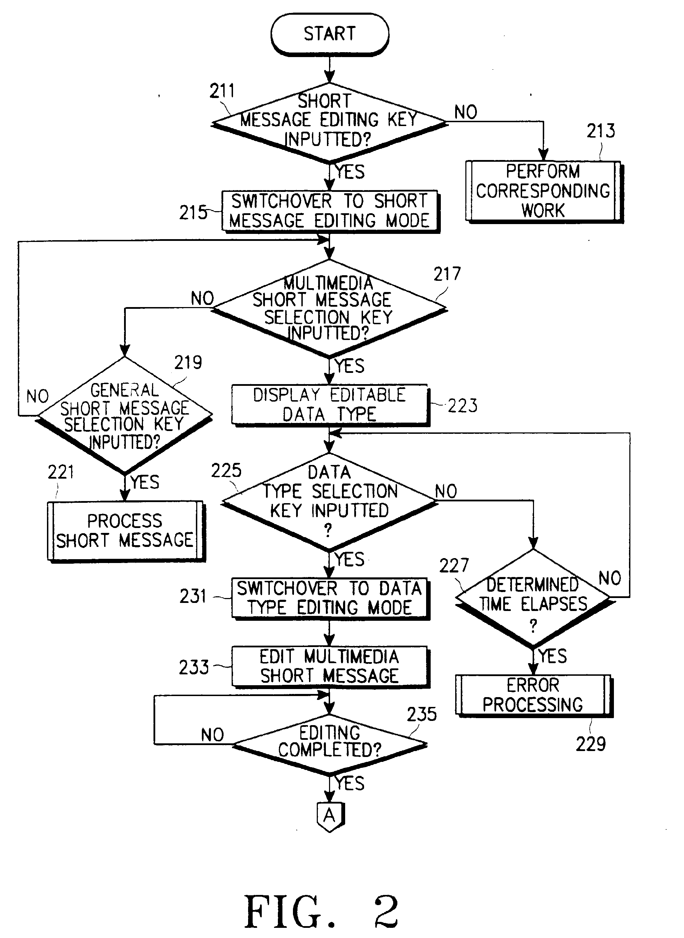

FIG. 2 is a flowchart illustrating the multimedia short message editing process according to an embodiment of the present invention.

Referring to FIG. 2, if the key signal is inputted from the key input section 115, the control section 111 checks whether or not the input key signal is a short message editing key signal at step 211. If it is determined at step 211 that the input key signal is not the short message editing key signal, the control section 111 proceeds to step 213. At step 213, the control section 111 performs the work corresponding to the key signal inputted from the key input section 115.

If the key signal inputted from the key input section 115 is determined to be the short message editing key signal, as a result of checking, the control section 111 proceeds to step 215. At step 215, the control section 111 switches the present mode of the portable radio terminal over to a short message editing mode, and proceeds to step 217. At step 217, the control section 111 detects the input of any key signal from the key input section 115, and checks whether or not the input key signal is a multimedia short message selection key signal. If it is determined that the input key signal is not the multimedia short message selection key signal, as a result of checking, the control section 111 proceeds to step 219. At step 219, the control section 111 checks whether or not the key signal inputted from the key input section 115 is a general short message selection key signal. If it is determined that the input key signal is not the general short message selection key signal, as a result of checking, the control section 111 waits for the input of the multimedia short message selection key and the general short message selection key for a predetermined time in the short message editing mode. If the key signal inputted from the key input section 115 is determined to be the general short message selection key signal, as a result of checking, the control section 111 proceeds to step 221. At step 221, the control section 111 performs the general short message process, i.e., the editing and transmission of text data of a predetermined size, and then returns.

At step 217, if the key signal inputted from the key input section 115 is the multimedia short message selection key signal, the control section 111 proceeds to step 223. Here, the multimedia short message means a snort message which transmits picture data, melody data, and large-capacity text data. At step 223, the control section 111 controls the display section 127 to display an editable data type, and proceeds to step 225. Here, the data type represents whether or not the multimedia short message is for the picture data, address book, schedule, global positioning system (GPS) information, or retransmission of the message.

At step 223, the control section 111 checks whether or not a data type selection key is inputted from the key input section 115. If it is determined that the data type selection key is not inputted, as a result of checking, the control section 111 proceeds to step 227. At step 227, the control section 111 checks whether or not a predetermined time, for example, 5 seconds elapses. If it is determined that the predetermined time does not elapse, as a result of checking, the control section 111 returns to step 225. If it is determined that the predetermined time elapses, as a result of checking, the control section 111 proceeds to step 229. At step 229, the control section 111 processes the present process as an error, switches the short message editing mode over to a standby mode, and then returns.

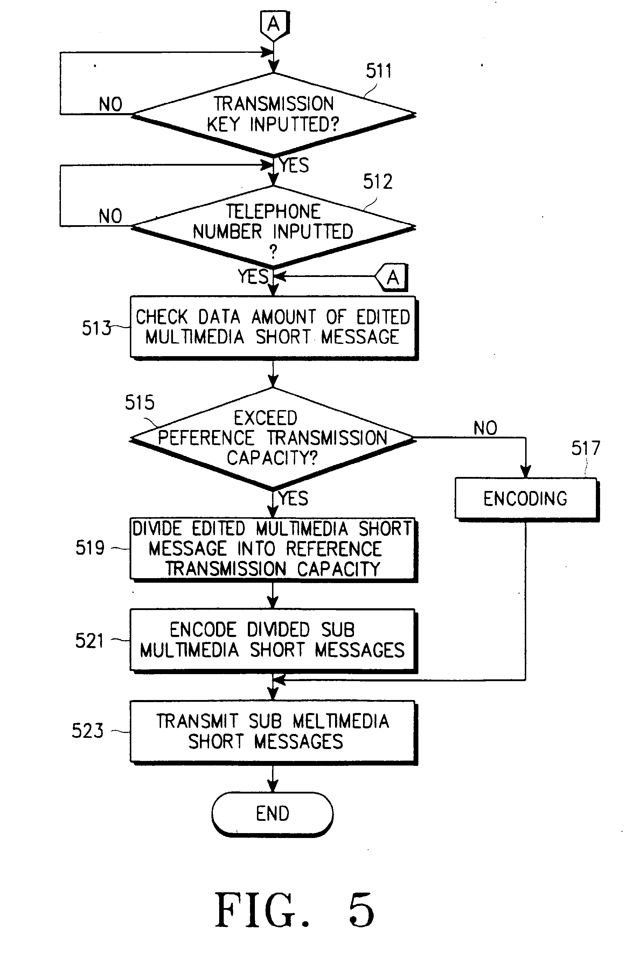

At step 225, if the data type selection key signal is inputted from the key input section 225, the control section 111 proceeds to step 231. At step 231, the control section switches the present mode of the portable radio terminal to an editing mode for editing a short message of the selected data type, and proceeds to step 233. At step 233, the control section edits the short message inputted from the user, and proceeds to step 235. At step 235, the control section 111 checks whether or not an editing completion key is inputted from the key input section 115, and if the editing completion key is inputted, it performs the transmission of the multimedia short message. The multimedia short message transmitting process will be explained in detail with reference to FIGs. 5, 6, and 7.

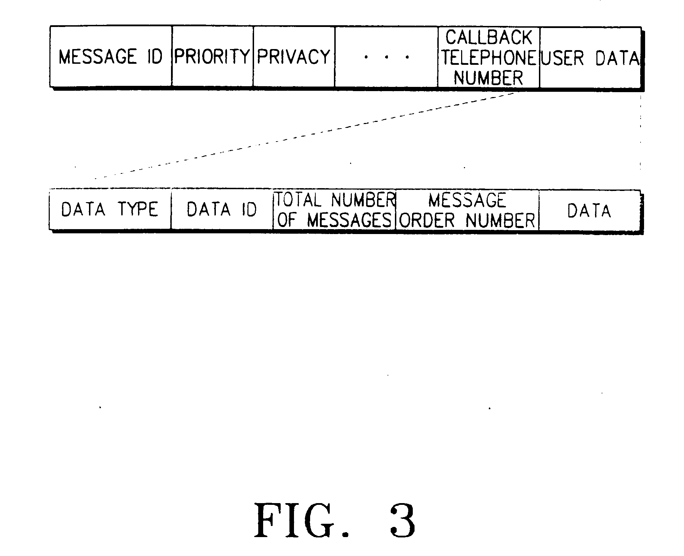

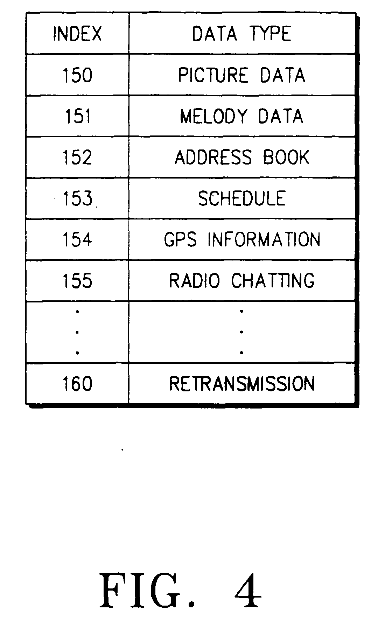

FIG. 3 is a view illustrating the short message format according to an embodiment of the present invention. FIG. 4 is a view illustrating a table showing the data type of the short message format of FIG. 3.

According to the general short message service, the short message has a reference transmission capacity that can be transmitted at one time. The format of the general short message has a structure composed of a message identifier (ID), a priority indicating the priority order of the short message, a privacy, a callback number, and user data. The user data has a transmission capacity of a specified size. In the embodiment of the present invention, when the multimedia short message is transmitted, a specified region of the user data in the short message format is discriminated. If it is assumed that the transmission capacity of the user data is 80 bytes, the upper 4 bytes are discriminated as the multimedia short message format.

Specifically, the user data is composed of a region for designating the data type, a region for designating the data identifier (ID), a region for indicating the total number of messages, a region for indicating the number of the message order, and a data region including data to be actually transmitted.

The data type indicates which type of data is transmitted, i.e., the type of the transmitted data of the multimedia short message such as a picture data, melody data, etc. FIG. 4 shows the data types of the multimedia short message which can be supported in the portable radio terminal. Indexes are allocated to the respective multimedia short messages according to the data types. For instance, in the case of picture data, '150' is allocated as its index, and in the case of the melody data, '151' is allocated as its index, so that the allocated index is designated in the data type region. Here, all ASCII characters excepting Korean characters, English characters, and symbols may be used as the index. If the index of the data type in the multimedia short message is '160', it indicates a retransmission request from the terminating portable radio terminal.

The data ID is a separate identifier for increasing the efficiency of the multimedia short message process of the terminating portable radio terminal in the case that a plurality of portable radio terminals simultaneously transmit a multimedia short message to the same terminating portable radio terminal, and is designated as a random number in the range of 1 ∼ 255.

The total number of messages indicates the total number of divided sub multimedia short messages. If the multimedia short message has a data capacity which exceeds the reference transmission capacity that can be supported in the short message service, the multimedia short message is divided into a plurality of sub multimedia short messages each of which has a reference transmission capacity. Here, the edited multimedia short message can be divided into a maximum of 255 sub multimedia short messages.

The number of the message order indicates what order the currently transmitted message has among the plurality of sub multimedia short messages if the multimedia short message is divided into the plurality of sub multimedia short messages.

The data region is allocated a capacity of 76 bytes, and includes actual data except for the four discriminated regions.

FIG. 5 is a flowchart illustrating the multimedia short message transmitting process according to an embodiment of the present invention.

Referring to FIG. 5, at step 511, the control section 111 checks whether or not the transmission key signal is inputted from the key input section 115 within the predetermined time in a state that the editing of the multimedia short message is completed as shown in FIG. 2. If the transmission key signal is determined to be inputted, as a result of checking, the control section 111 proceeds to step 512. At step 512, the control section 111 reads out from the memory 113 a message requesting the input of the telephone number of the opposite portable radio terminal to which the multimedia short message is to be transmitted, for example, a message such as "Input the terminating telephone number.", and displays the message through the display section 127. Thereafter, the control section 111 checks whether or not a key signal corresponding to the telephone number of the opposite portable radio terminal is inputted from the key input section 115, and if so, it proceeds to step 513. At step 513, the control section 111 checks the data amount of the edited multimedia short message, and proceeds to step 515. At step 515, the control section 111 checks whether or not the data exceeds the reference transmission capacity, i.e., 76 bytes. If it is determined that the data does not exceed the reference transmission capacity, as a result of checking, the control section 111 proceeds to step 517. At step 517, the control section 111 performs an encoding of the data according to the data type of the edited multimedia short message, and proceeds to step 523.

Meanwhile, if the data exceeds the reference transmission capacity at step 515, the control section 111 proceeds to step 519. At step 519, the control section 111 divides the edited multimedia short message into a plurality of sub multimedia short messages, and proceeds to step 521. For instance, if the data amount of the edited multimedia short message is 380 bytes, the control section 111 divides the edited multimedia short message into 5 sub multimedia short messages since the data amount which can be transmitted at one time for a multimedia short message is 76 bytes.

At step 521, the control section 111 encodes the respective divided sub multimedia short messages, and proceeds to step 523. At step 523, the control section 111 transmits the divided sub multimedia short messages, and then returns. Here, since the multimedia short message is divided into 5 sub multimedia short messages, the control section 111 performs the message transmission 5 times.

Now, the multimedia short message transmitting process according to the embodiment of the present invention will be explained in more detail.

If the data type of the edited multimedia short message is a picture message, an index '150' which indicates the picture data type is designated in the data type of the multimedia short message format. Also, since the data amount of the edited multimedia short message is 380 bytes, the edited multimedia short message is divided into 5 sub multimedia short messages, and the total number of messages becomes 5. The respective sub multimedia short messages are allocated their message order numbers according to the order of their division, and these message order numbers are designated in the message order number region. In the data region is carried the actual divided data of 76 bytes. Here, the data ID of the multimedia short message is produced as a random number, and equally designated for the 5 divided sub multimedia short messages.

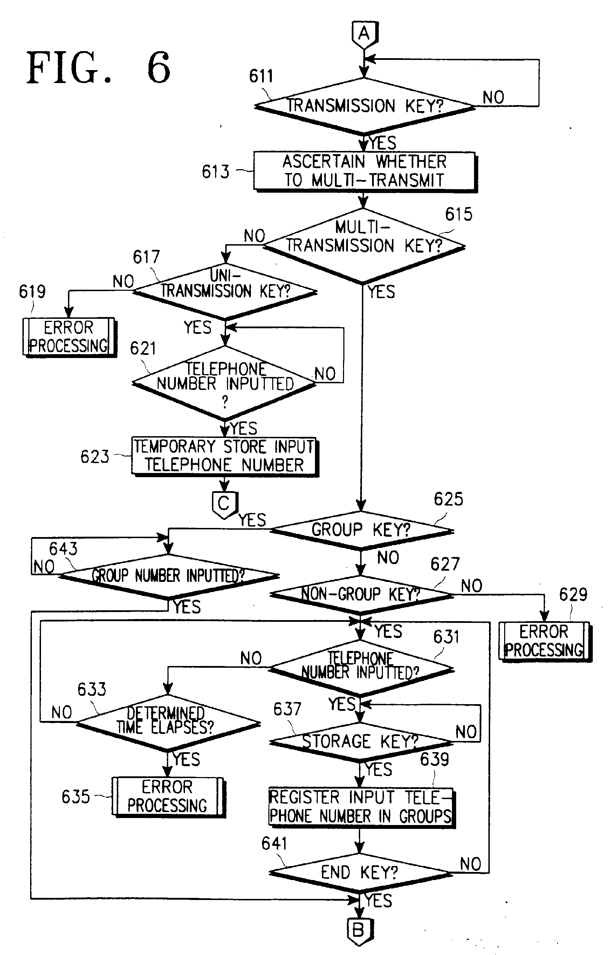

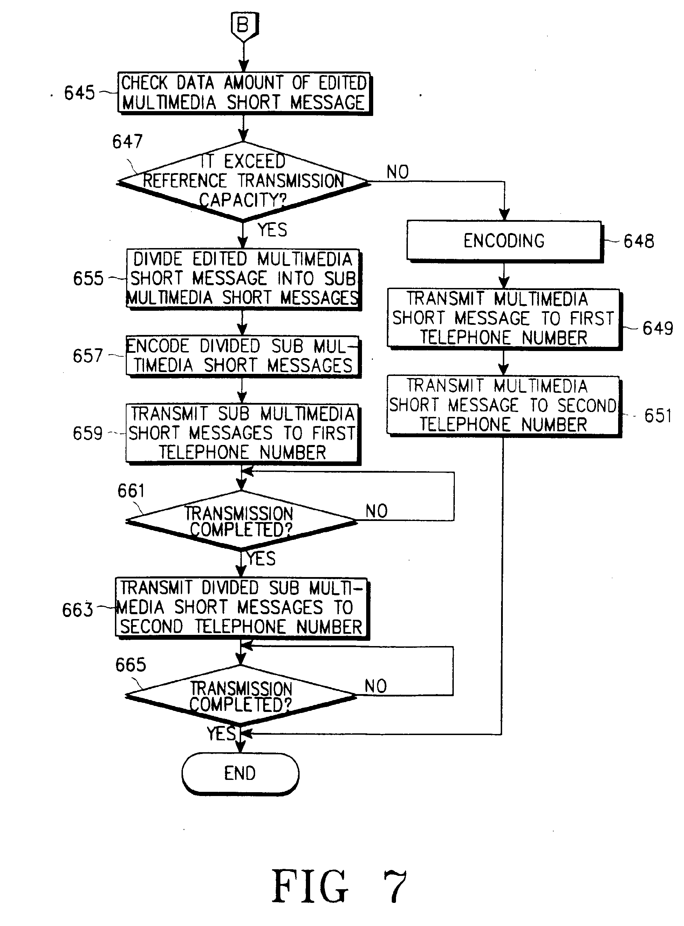

FIGs. 6 and 7 are flowcharts illustrating the multimedia short message transmitting process according to another embodiment of the present invention.

Referring to FIGs. 6 and 7, at step 611, the control section 111 checks whether or not the transmission key signal is inputted from the key input section 115 within the predetermined time in a state that the editing of the multimedia short message is completed as shown in FIG. 2. If the transmission key signal is determined to be inputted, as a result of checking, the control section 111 proceeds to step 613. At step 613, the control section 111 reads out from the memory 113 a message identifying whether to multi-transmit, for example, a message such as "1: multi-transmission, 2: uni-transmission", displays the message through the display section 127 so that the user identifies whether to multi-transmit, and then proceeds to step 615. At step 615, if the key signal is inputted from the key input section 115, the control section 111 checks whether or not the input key signal is a multi-transmission key signal. If it is determined that the input key signal is not the multi-transmission key signal, as a result of checking, the control section 111 proceeds to step 617. At step 617, the control section 111 checks whether or not the key signal inputted from the key input section 115 is a uni-transmission key signal. If it is determined that the input key signal is not the uni-transmission key signal, as a result of checking, the control section 111 proceeds to step 619, performs an error processing, and then returns.

If the input key signal is determined to be the uni-transmission key signal, as a result of checking, the control section 111 proceeds to step 621. At step 621, the control section 111 reads out from the memory 113 a message requesting the input of the telephone number of the opposite portable radio terminal to which the multimedia short message is to be transmitted, for example, a message such as "Input the terminating telephone number.", and displays the message through the display section 127. Thereafter, the control section 111 checks whether or not a key signal corresponding to the telephone number of the opposite portable radio terminal is inputted from the key input section 115, and if so, it proceeds to step 623. At step 623, the control section 111 temporarily registers the input telephone number in the memory 113, and proceeds to step 513 of FIG. 5.

Meanwhile, at step 615, if the key signal inputted from the key input section 115 is the multi-transmission key signal, the control section 111 proceeds to step 625. At step 625, the control section 111 reads out from the memory 113 a message which requests to select either using a group that is registered for the multi-transmission or preparing and using a non-group, for example, a message such as "1: Group, 2: Non-Group", and displays the message through the display section 127. Thereafter, the control section 111 checks whether or not a key signal is inputted from the key input section 115. If it is determined that a key signal is inputted, as a result of checking, the control section 111 checks whether or not the input key signal is a group key signal. If it is determined that the input key signal is not the group key signal, as a result of checking, the control section proceeds to step 627. At step 627, the control section 111 checks whether or not the key signal provided from the key input section 115 is a non-group key signal. If the key signal is not the non-group key signal, the control section 111 proceeds to step 629, performs an error processing, and then returns.

If the input key signal is determined to be the non-group key signal, as a result of checking, the control section 111 proceeds to step 631. At step 631, the control section 111 reads out from the memory 113 a message requesting the input of the telephone number of the opposite portable radio terminal to which the multimedia short message is to be transmitted, for example, a message such as "Input the terminating telephone number.", and displays the message through the display section 127. Thereafter, the control section 111 checks whether or not a key signal corresponding to the telephone number of the opposite portable radio terminal is inputted from the key input section 115, and if not, it proceeds to step 633. At step 633, the control section 111 checks whether or not a predetermined time, for example, 5 seconds elapses. If it is determined that the predetermined time does not elapse, as a result of checking, the control section 111 returns to step 631. If the predetermined time elapses, the control section 111 proceeds to step 635, performs an error processing, and then returns.

Meanwhile, if a telephone number is inputted from the key input section 115 at step 631, the control section 111 proceeds to step 637. At step 637, the control section 111 checks whether or not a storage key signal is inputted from the key input section 115, and if so, then proceeds to step 639. At step 639, the control section 111 temporarily registers the input telephone number in the memory 113 as a group to which a certain group number is given, and then proceeds to step 641. At step 641, the control section 111 reads out from the memory 113 a message identifying whether to complete the group registration, for example, a message such as "Group registration completed?", and displays the message through the display section 127. Thereafter, the control section checks whether or not an end key signal is inputted from the key input section 115. If it is determined that the end key signal is inputted, as a result of checking, the control section 111 proceeds to step 645, while if the end key signal is not inputted, it returns to step 631.

Meanwhile, if the key signal inputted from the key input section 115 is the group key signal at step 625, the control section 111 proceeds to step 643. At step 643, the control section 111 displays the group numbers of the groups registered in the memory 113, reads out from the memory 113 and displays through the display section 127 a message ascertaining which group is to be selected among the groups, for example, a message such as "1: Group of Coteries, 2: Group of Staffs, 3: Group of Friends". Thereafter, the control section 111 checks whether or not a group selection signal for selecting one among the registered groups (for example, in the case of selecting the group of coteries, a key signal corresponding to a digit key "1" provided in the key input section 115 is the group selection signal) is inputted. If the group selection key signal is determined to be inputted, as a result of checking, the control section 111 proceeds to step 645.

At step 645, the control section 111 checks the data amount of the edited multimedia short message, and proceeds to step 647. At step 647, the control section 111 checks whether or not the checked data amount exceeds the reference transmission capacity, i.e., 76 bytes. If it is determined that the data amount does not exceed the reference transmission capacity, as a result of checking, the control section 111 proceeds to step 648. At step 648, the control section 111 performs an encoding of the edited multimedia short message according to its data type, and proceeds to step 649. At step 649, the control section 111 transmits the edited multimedia short message to one among the registered groups, i.e., to a first telephone number among the registered telephone numbers, and proceeds to step 651 after the completion of the transmission. At step 651, as the multimedia short message transmission to the first telephone number is completed, the control section 111 transmits the multimedia short message to a second registered telephone number, and returns.

Meanwhile, if the data amount of the edited multimedia short message exceeds the reference transmission capacity at step 647, the control section 111 proceeds to step 655. At step 655, as the data amount exceeds the reference transmission capacity, the control section 111 divides the data of the edited multimedia short message into a plurality of sub multimedia short messages according to the reference transmission capacity, and proceeds to step 657. For instance, if the data amount of the edited multimedia short message is 380 bytes, the control section 111 divides the edited multimedia short message into 5 sub multimedia short messages since the data amount which can be transmitted at one time for a multimedia short message is 76 bytes. At step 657, the control section 111 encodes the respective divided sub multimedia short messages, and proceeds to step 659.

At step 659, the control section 111 transmits the divided sub multimedia short message to one among the telephone numbers registered in groups, i.e., a first telephone number among the registered telephone numbers, and proceeds to step 661. Here, a plurality of sub multimedia short messages, i.e., 5 sub multimedia short messages are sequentially transmitted to the first telephone number in the order of the division. At step 661, the control section 111 checks whether or not the transmission of the sub multimedia short messages to the first telephone number is completed. If the transmission is determined to be completed, as a result of checking, the control section 111 checks whether or not the final one among the sub multimedia short messages has been transmitted. If so, the control section 111 proceeds to step 663. At step 663, the control section 111 transmits the plurality of sub multimedia short messages to the second telephone number registered following the first telephone number, and proceeds to step 665. At step 665, the control section 111 checks whether or not the transmission of the sub multimedia short messages to the second telephone number is completed, and if so, the control section 111 returns.

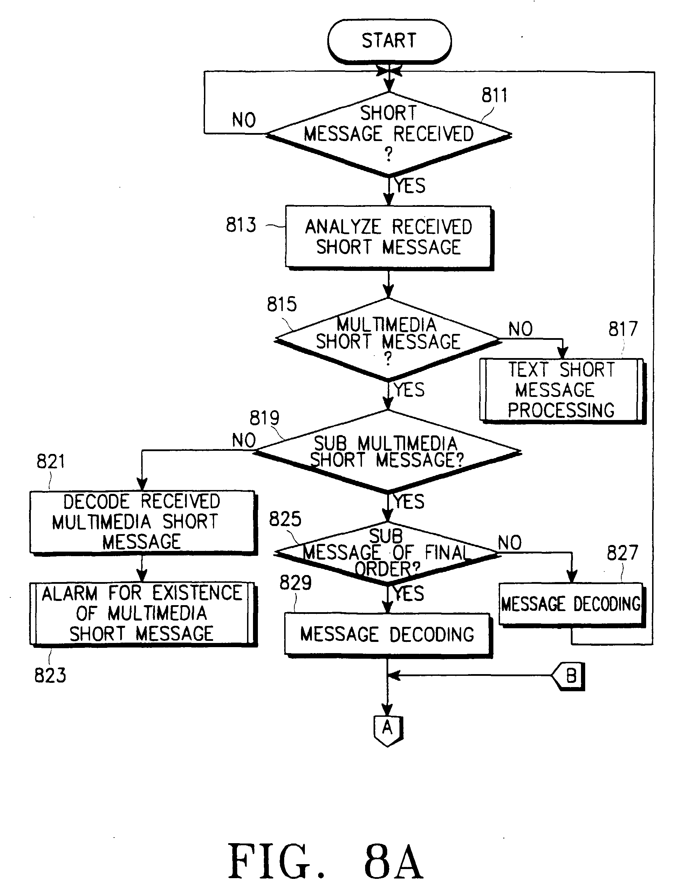

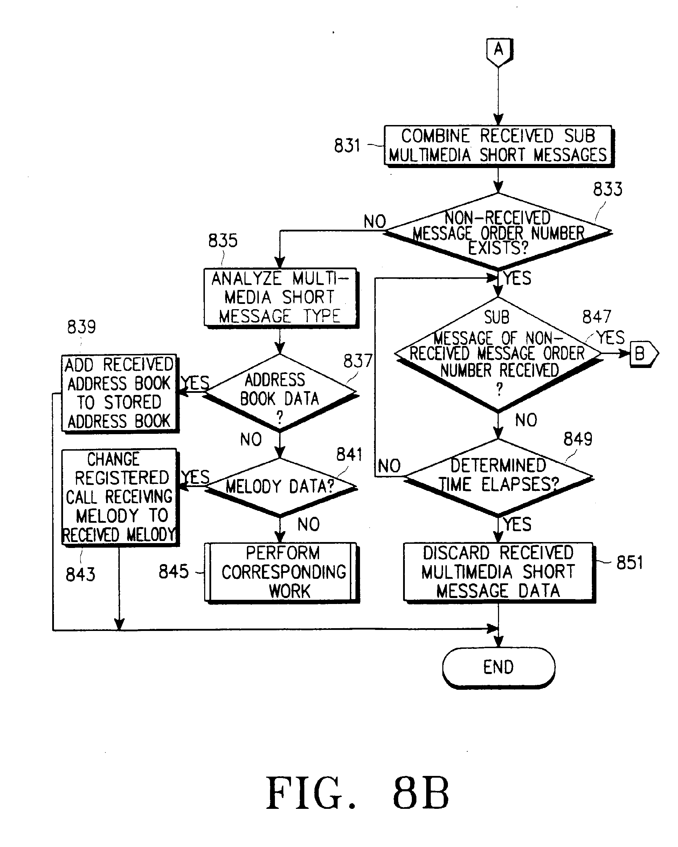

FIG. 8 is a flowchart illustrating the multimedia short message receiving process according to an embodiment of the present invention.

Referring to FIG. 8, the control section 111 checks whether or not the short message is received at step 811, and if the short message is received, it proceeds to step 813. At step 813, the control section 111 analyzes the received short message, and proceeds to step 815. At step 815, the control section 111 checks whether or not the received short message is a multimedia short message. Here, whether or not the received short message is a multimedia short message is judged by checking the index of the message, i.e., the data type region that is the first byte of the user data region in a header of the received short message. Specifically, if the index designated in the data type region is an index except for indexes indicating the Korean characters, English characters, and symbols, it is judged to indicate a multimedia short message. If it is determined that the received short message is not the multimedia short message, as a result of checking, the control section 111 proceeds to step 817. At step 817, the control section 111 performs a typical text short message processing, and returns.

If the received short message is determined to be the multimedia short message, as a result of checking at step 815, the control section 111 proceeds to step 819. At step 819, the control section 111 checks whether or not the multimedia short message is a sub multimedia short message. Specifically, the control section 111 judges that the multimedia short message is a sub multimedia short message if the total number of messages is 2 or more by checking a third byte of the user data region. If it is determined that the multimedia short message is not a sub multimedia short message, as a result of checking, the control section 111 proceeds to step 821. At step 821, the control section 111 performs a decoding in coincidence with the data type of the received multimedia short message, stores the decoded data in a determined region of the memory 113, and proceeds to step 823. At step 823, the control section 111 provides an alarm indicating the existence of the multimedia short message, and returns. Here, provides an alarm indicating the existence of the multimedia short message is effected in such a manner that an alarm sound such as a beep sound is generated through an alarm section (not illustrated), and displays an icon discriminated from icons displayed on the display section 127 if a typical text short message exists.

Meanwhile, if the received multimedia short message is determined to be a sub multimedia short message, as a result of checking at step 819, the control section 111 proceeds to step 825. At step 825, the control section 111 checks whether or not the received sub multimedia short message is the final message. Here, checking of the final message is effected in such a manner that the region of the total number of messages which is the third byte of the user data region as well as the message order region which is a fourth byte of the user data region is checked, and then compared with the total number of messages to check the final order. If it is determined that the received sub multimedia short message is not the final message, as a result of checking, the control section 111 proceeds to step 827. At step 827, the control section 111 decodes the received sub multimedia short message in coincidence with the data type, and returns to step 811 to receive the sub multimedia short message having the final message order number.

If the received sub multimedia short message is determined to be the final order message, as a result of checking at step 825, the control section 111 proceeds to step 829. At step 829, the control section 111 decodes the received sub multimedia short message, stores the decoded message in the determined region of the memory 113, and proceeds to step 831. At step 831. the control section 111 combines in order and stores in the memory 113 the sub multimedia short messages sequentially following the received sub multimedia short message, and proceeds to step 833. At step 833, the control section 111 checks whether or not the order number of any non-received message exists in the combined multimedia short messages. Here, checking of the order number of the non-received message is effected by checking the lacking message order number when the message order numbers prior to the final order number are combined. If it is determined that the order number of the non-received message does not exist, as a result of checking, the control section 111 proceeds to step 835. At step 835, the control section 111 analyzes the type of the combined multimedia short message, i.e., the data type, and proceeds to step 837. At step 837, the control section 111 checks whether or not the multimedia short message is the data of an address book, i.e., whether or not the index designated in the data type is 152. If the multimedia short message is determined to be address book data, as a result of checking, the control section 111 proceeds to step 839. At step 839, the control section 111 adds the address book data of the received multimedia short message to the address book stored in the memory, and returns.

If it is determined that the type of the multimedia short message is not the address book data, as a result of checking at step 837, the control section 111 proceeds to step 841. At step 841, the control section 111 checks whether or not the type of the multimedia short message is melody data, i.e., whether or not the index of the data type designated in the data type region is 151. If it is melody data, the control section 111 proceeds to step 843. At step 843, the control section 111 changes a call receiving melody currently registered in the memory 113 to the melody of the multimedia short message, and returns. Meanwhile, in the embodiment of the present invention, only the cases wherein the data type of the combined multimedia short message is the address book or the melody is explained. In the case of other data types, the control section 111 proceeds to step 845, performs the work corresponding to the data type, and returns.

Meanwhile, if it is determined that the non-received message order number exists, as a result of checking at step 833, the control section 111 proceeds to step 847. At step 847, the control section 111 checks whether or not the message of the non-received message order number is received in a standby state. If it is determined that the message of the non-received message order number is received, as a result of checking, the control section 111 returns to step 831. If it is determined that the message of the non-received message order number is not received, as a result of checking, the control section 111 proceeds to step 849. At step 849, the control section 111 checks whether or not a predetermined time, for example, 7 minutes, elapses. If it is determined that the predetermined time does not elapse, as a result of checking, the control section 111 returns to step 847. If it is determined that the predetermined time elapses, as a result of checking, the control section 111 proceeds to step 851. At step 851, the control section 111 discards the data of the received and combined multimedia short message, and returns.

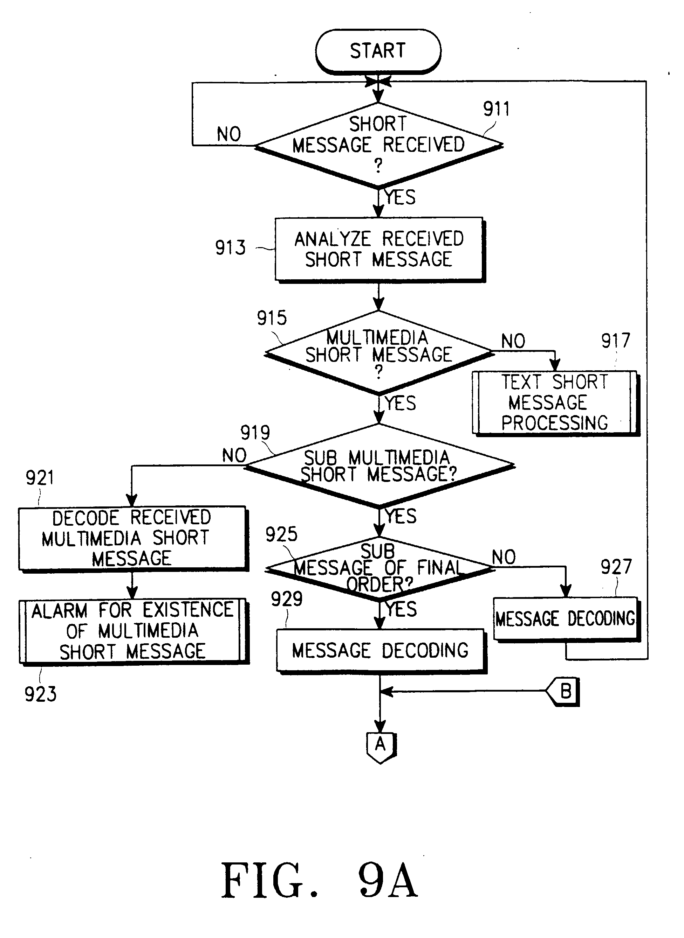

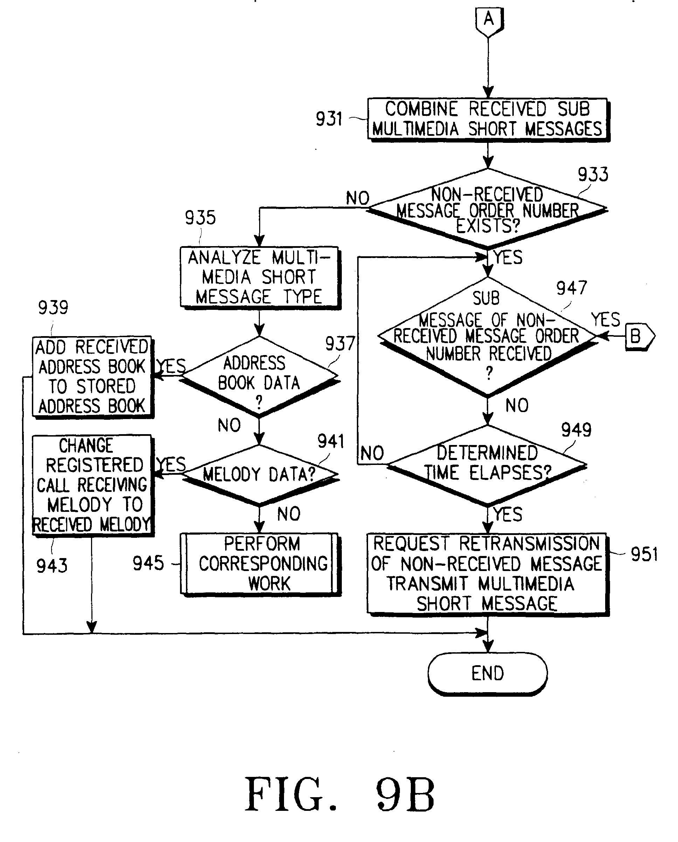

FIG. 9 is a flowchart illustrating the multimedia short message receiving process according to another embodiment of the present invention.

Steps 911 to 949 illustrated in FIG. 9 correspond to the steps 811 to 849 of FIG. 8 as explained above, and the explanation thereof will be omitted. If the predetermined time elapses at step 949, the control section 111 proceeds to step 951. At step 951, the control section 111 transmits a multimedia short message requesting retransmission of the message of the non-received message order number to the opposite portable radio terminal, and returns. Here, the multimedia short message requesting the retransmission of the message of the non-received message order number is discriminated from the general multimedia short message.

As shown in FIGs. 3 and 4, the index '160' indicating the retransmission request is designated in the region of the data type, and the data ID is the same as that of the message of the non-received message order number. Also, the total number of the messages is designated as the same as the total message number of the received multimedia short messages, and the non-received message order number is designated in the message order region. No data is written in the data region. If the originating portable radio terminal receives the multimedia short message for requesting the retransmission, it retransmits the message of the non-received message order number to the terminating portable radio terminal.

As described above, the present invention enables the transmission of the multimedia data which exceeds the reference capacity in addition to the transmission of the typical text short message using the short message service in a portable radio terminal. Accordingly, it can satisfy the diverse data transmission requests of the portable radio terminal user, and remove the complicated work for transmitting the short message several times when transmitting the large-capacity data, thereby improving the user convenience in use.

Also, according to the present invention, the multimedia short message transmission is possible using the conventional short message service provided in the mobile radio communication system only by modifying the man-machine interface (MMI) of the portable radio terminal, and thus the use efficiency of the resources of the mobile radio communication system is increased.

While this invention has been described in connection with what is presently considered to be the most practical and preferred embodiments, the invention should not be limited to the disclosed embodiments, but should be defined by the scope of the appended claims.

## Claims

1. A method of transmitting a multimedia short message using a short message service in a portable radio terminal, comprising the steps of:
editing the multimedia short message;
receiving the entry of a transmission key after completion of the multimedia short message editing;
receiving the entry of a telephone number of an opposite portable radio terminal to which the multimedia short message is to be transmitted after the entry of the transmission key;
if it is determined that a data amount of the edited multimedia short message exceeds a reference transmission capacity, as a result of checking after the entry of the telephone number, creating a plurality of sub multimedia short messages by dividing the data amount of the multimedia short message by the reference transmission capacity; and
sequentially transmitting the plurality of sub multimedia short messages to the telephone number.

2. A method of transmitting a multimedia short message using a short message service in a portable radio terminal, comprising the steps of:
editing the multimedia short message;
receiving a selection of multi-transmission if a transmission request is detected after completion of the multimedia short message editing;
dividing the multimedia short message into a plurality of sub multimedia short messages having a reference transmission capacity if it is determined that a data capacity of the edited multimedia short message exceeds the reference transmission capacity, as a result of checking the data capacity when the multi-transmission is selected; and
multi-transmitting the divided sub multimedia short messages sequentially.

3. The method of transmitting a multimedia short message of claim 1 or 2, wherein the multimedia short message has a message structure composed of a data type region, a data identifier (ID) region, a region for the total number of messages, a message order region, and a data region.

4. The method of transmitting a multimedia short message of claim 3, wherein the data type region indicates the type of data of the multimedia short message such as picture data, melody data, large-capacity text data, and retransmission request data.

5. The method of transmitting a multimedia short message of claim 3, wherein the data ID region indicates a separate identifier for increasing the efficiency of the multimedia short message process of a terminating portable radio terminal in the case that a plurality of portable radio terminals simultaneously transmit a multimedia short message to the same terminating portable radio terminal.

6. The method of transmitting a multimedia short message of claim 3, wherein the region for the total number of messages indicates the total number of sub multimedia short messages into which the multimedia short message is divided and each of which has the reference transmission capacity in the case that the multimedia short message exceeds the reference transmission capacity.

7. The method of transmitting a multimedia short message of one of the claims 1 to 6, wherein the edited multimedia short message can be divided into 255 sub multimedia short messages at maximum.

8. The method of transmitting a multimedia short message of claim 3, wherein the region for the number of the message order indicates what order the currently transmitted message has among the plurality of sub multimedia short messages if the multimedia short message is divided into the plurality of sub multimedia short messages.

9. The method of transmitting a multimedia short message of one of the claims 1 to 8, wherein the reference transmission capacity is a data capacity which can be transmitted as a single short message in the short message service provided in a mobile radio communication system to which the portable radio terminal belongs.

10. The method of transmitting a multimedia short message of one of the claims 1 to 9, wherein the multimedia short message editing step comprises the substeps of:
converting a present mode of the portable radio terminal into a short message editing mode if a short message editing key is inputted;
receiving input of a multimedia short message selection key in the short message editing mode;
displaying an editable data type so that the data type to be edited can be selected when the multimedia short message selection key is inputted; and
converting the present mode into the editing mode of the corresponding data type and editing the multimedia short message when the data type is selected.

11. The method of transmitting a multimedia short message of one of the claims 2 to 10, wherein the step of receiving the selection of the multi-transmission comprises the substeps of:
displaying a message requesting to select one of the multi-transmission and a uni-transmission if the transmission request is detected; and
receiving the selection of one of the multi-transmission and the uni-transmission during the display of the message.

12. The method of transmitting a multimedia short message of one of the claims 2 to 10, wherein the step of receiving the selection of the multi-transmission comprises the substeps of:
receiving an input of a multi-transmission key according to the selection of the multi-transmission; and
receiving an input of a group number for selecting one among registered groups if a group key is inputted after the input of the multi-transmission key.

13. The method of transmitting a multimedia short message of one of the claims 2 to 10, wherein the step of receiving the selection of the multi-transmission comprises the substeps of:
receiving an input of a multi-transmission key according to the selection of the multi-transmission; and
receiving a telephone number subject to the multi-transmission until an end key is inputted if a non-group key is inputted after the input of the multi-transmission key, and registers the telephone number in a certain group.

14. The method of transmitting a multimedia short message of one of the claims 2 to 13, wherein the step of multi-transmitting the sub multimedia short message comprises the substeps of:
sequentially transmitting the sub multimedia short messages to a firstly registered telephone number among telephone numbers registered in a certain group corresponding to the group number; and
sequentially transmitting the sub multimedia short messages to the telephone number following the firstly registered telephone number when the transmission of the sub multimedia short messages to the firstly registered telephone number is completed.

15. The method of transmitting a multimedia short message of claim 14, wherein the step of sequentially multi-transmitting the sub multimedia short message comprises the substeps of:
sequentially transmitting the sub multimedia short messages to the firstly registered telephone number among the telephone numbers registered in the certain group; and
sequentially transmitting the sub multimedia short messages to the telephone number registered following the firstly registered telephone number when the transmission of the sub multimedia short messages to the firstly registered telephone number is completed.

16. A method of receiving a multimedia short message using a short message service in a portable radio terminal, comprising the steps of:
checking whether or not a received short message is the multimedia short message when the short message is received;
if it is determined that the short message is the multimedia short message, as a result of checking, checking whether or not the multimedia short message is composed of sub multimedia short messages;
if it is determined that the multimedia short message is composed of the sub multimedia short messages, as a result of checking, checking whether or not the presently received sub multimedia short message is the last one; and
if it is determined that the presently received sub multimedia short message is the last one, as a result of checking, constructing the multimedia short message by combining all the received sub multimedia short messages.

17. The method of receiving a multimedia short message of claim 16, wherein the multimedia short message has a structure composed of a data type region for indicating a data type of the multimedia short message, a data identifier (ID) region designated by the originating portable radio terminal as a random number, a region for the total number of messages which indicates how many sub multimedia short messages the multimedia short message is divided into, and a message order region for indicating the order number of the respective sub multimedia short message.

18. The method of receiving a multimedia short message of claim 17, wherein the step of checking whether or not the received short message is the multimedia short message comprises the steps of reading the data type region, and judging that the received short message is the multimedia short message if the data type region of the received short message does not corresponds to an ASCII code value of a text short message provided by the portable radio terminal.

19. The method of receiving a multimedia short message of claim 17, wherein the step of checking whether or not the received multimedia short message is the sub multimedia short message comprises the steps of reading the region for the total number of messages, and judging that the received multimedia short message is the sub multimedia short message if the total number of messages is a plural number.

20. The method of receiving a multimedia short message of claim 17, wherein the step of checking whether or not the received sub multimedia short message is the final one comprises the step of judging that the received sub multimedia short message is the final one if the data designated in the region for the total number of messages is identical to the data designated in the message order number.

21. The method of receiving a multimedia short message of claim 17, further comprising the steps of:
checking whether or not the sub multimedia short message corresponding to the message order number of a non-received message is received for a predetermined time if the message of the non-received message order number exists after combining all the received sub multimedia short messages; and
discarding the combined sub multimedia short messages if it is determined that the sub multimedia short message corresponding to the non-received message order number is not received within the predetermined time, as a result of checking.

22. The method of receiving a multimedia short message of claim 17, further comprising the step of:
checking whether or not the sub multimedia short message corresponding to the message order number of a non-received message is received for a predetermined time if the message of the non-received message order number exists after combining all the received sub multimedia short messages; and
requesting retransmission of the sub multimedia short message corresponding to the non-received message number to the originating portable radio terminal which transmitted the multimedia short message if it is determined that the sub multimedia short message corresponding to the non-received message order number is not received within the predetermined time, as a result of checking.

23. The method of receiving a multimedia short message of claim 22, wherein the step of requesting retransmission of the sub multimedia short message corresponding to the non-received message number designates an index indicating the retransmission request in the data type region, designates a data identifier identical to that of the received multimedia short message in the data identifier region, designates the total number of messages identical to that of the received multimedia short message in the region for the total number of messages, and creates the multimedia short message designating the non-received message order number in the message order number region to transmit the created multimedia short message to the originating portable radio terminal.
